## Europäisches Patentamt

## European Patent Office

## Office européen des brevets

(19)

(11) Veröffentlichungsnummer: **0 175 158**
**B1**

(12)

# EUROPÄISCHE PATENTSCHRIFT

(45) Veröffentlichungstag der Patentschrift:
24.05.89

(51) Int. Cl.⁴: **G 03 B 27/62**

(21) Anmeldenummer: **85110462.0**

(22) Anmeldetag: **20.08.85**

(54) **Belichtungseinheit für Druckplatten-Kopiergerät.**

(30) Priorität: **22.08.84 DE 3430932**

(43) Veröffentlichungstag der Anmeldung:
**26.03.86 Patentblatt 86/13**

(45) Bekanntmachung des Hinweises auf die Patenterteilung:
**24.05.89 Patentblatt 89/21**

(84) Benannte Vertragsstaaten:
**AT BE CH DE FR GB IT LI LU NL SE**

(56) Entgegenhaltungen:
**EP-A- 0 075 251**
**FR-A- 2 514 158**
**US-A- 2 512 182**
**US-A- 3 198 069**
**US-A- 3 276 312**

(73) Patentinhaber: **POLYCHROME GMBH, Seesener Strasse 11, D-3360 Osterode (DE)**

(72) Erfinder: **te Brömmelstroet, Henk, Dipl.-Ing., Waldweg 15, D-3362 Windhausen (DE)**

(74) Vertreter: **Patentanwälte Müller-Boré, Deufel, Schön, Hertel, Lewald, Otto, Isartorplatz 6, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Halterung für Vorlagen, die auf eine Druckplatte abgebildet werden, mit einer senkrechten Belichtungsposition der Vorlage, mit einer waagerechten Position zum Einlegen bzw. Entnehmen der Vorlage und mit einer senkrechten Zwischenposition, sowie mit Mitteln zum Verschwenken der Vorlage um 180° zwischen der Belichtungsposition und der Zwischenposition, wobei zwei Vorlagehalter (52, 50) für zwei Vorlagen sowie Mittel zum Verschwenken jeder dieser Vorlagenhalter zwischen der Einlegeposition und der Zwischenposition vorgesehen sind.

Druckplatten-Kopiergeräte finden Verwendung beispielsweise bei der Herstellung von Zeitungen. Klebemontagen, die beispielsweise eine Zeitungsseite darstellen, werden mittels eines Kopierverfahrens auf eine metallene Druckplatte übertragen. Bekannt sind Belichtungseinheiten, bei welchen die Klebemontage an einem waagerecht anordbaren Vorlagenhalter befestigt wird. Dieser Vorlagenhalter wird dann zusammen mit der Klebemontage in die senkrechte Stellung verschwenkt, um in dieser Stellung belichtet von der Optik aufgenommen und mittels eines elektrostatischen Verfahrens auf die Druckplatte übertragen zu werden. Der erforderliche Zeitaufwand zur Einrichtung der Klebemontage und deren Belichtung ist verhältnismässig gross, so dass diese bekannten Vorrichtungen nur eine geringe Leistungsfähigkeit aufweisen.

Eine gattungsgemässe Halterung ist aus der EP-A 75 251 bekannt. Dort kann zwar ein Vorlagenhalter mit einer Vorlage versehen werden, während die andere Vorlage belichtet und auf die Platte übertragen wird, jedoch ist diese Halterung sehr aufwendig und kompliziert aufgebaut.

Der Erfindung liegt die Aufgabe zugrunde, eine einfache Halterung für ein Druckplatten-Kopiergerät zu schaffen, mit welcher ein schneller Arbeitsablauf erzielt werden kann.

Diese Aufgabe wird erfindungsgemäss dadurch gelöst, dass die Verschwenkung um 180° um eine vertikale Achse erfolgt, dass in der Halterung eine Beleuchtungsvorrichtung zur Beleuchtung der Vorlagen im Durchlicht vorgesehen ist, und dass die Vorlagen beim Verschwenken von der Einlegeposition in der Zwischenposition zur Anlage an Abdeckscheiben kommen.

Durch die erfindungsgemässe Anordnung der Beleuchtungsvorrichtung ergibt sich eine einfache aufgebaute Vorrichtung mit geringen Baumassnahmen.

Nach fertiger Belichtung der Platte mit einer Klebemontage wird die Halterung um ihre Vertikalachse gewendet, so dass die zweite Klebemontage für die Belichtung in Stellung gebracht ist und die erste Klebemontage von dem Vorlagenhalter entnommen und eine nächste Klebemontage positioniert werden kann.

In Ausgestaltung der Erfindung bestehen die Abdeckscheiben aus Milchglas oder opakem Kunststoff, die Beleuchtungsvorrichtung besteht aus vertikal angeordneten Neonröhren od. dgl. und in der Vertikalmitte der Halterung ist eine Trennwand angeordnet. Dadurch ergibt sich eine bessere Ausleuchtung der Vorlage und eine grössere Schärfe der Druckplatte. Eingeschaltet werden jeweils nur die Röhren, welche hinter der gerade zu belichtenden Vorlage angeordnet sind, das heisst, die Röhren, die zum Inneren der Belichtungseinheit hin angeordnet sind.

In Ausgestaltung der Erfindung sind die Vorlagenhalter, das heisst, die mit einer Einfassung versehenen Glasscheiben, an welchen die Vorlagen oder Klebemontagen befestigt werden, motorangetrieben, um von ihrer waagerechten Stellung in die senkrechte Belichtungsstellung und umgekehrt überführt zu werden. Vorzugsweise erfolgt die Verschwenkung der Vorlagenhalter über Seilzüge, wobei im oberen Bereich der Halterung über einen Motor angetriebene Aufwickelwellen angeordnet sind und die Seile über Umlenkrollen von den Aufwickelwellen zu dem Vorlagenhalter geführt sind. Diese Ausbildung des Antriebs ermöglicht eine exakte Bewegung der Vorlagenhalter, die einfach elektronisch gesteuert werden kann.

In Weiterbildung der Erfindung sind für jeden Vorlagenhalter Verriegelungseinrichtungen an der Halterung vorgesehen, wobei jede Verriegelungseinrichtung aus einem an dem Vorlagenhalter angeordneten Haken und einem an der Halterung angeordneten Riegel besteht, welcher insbesondere aus einer pneumatisch betätigbaren Rolle besteht, welche in den Haken eingreifen kann. Vorzugsweise sind an jeder Seite von Vorlagenhalter und Halterung je eine Verriegelungseinrichtung angeordnet. Damit ist es möglich, den Vorlagenhalter an der Halterung zu blockieren, so dass die exakte Stellung während der Belichtung gewährleistet ist.

Um ein Verkanten infolge ungleichmässigen Zuges der Seile zu verhindern, ist vorzugsweise jeder Seilzug mit einem automatischen Seilspanner versehen. Dadurch wird auch erreicht, dass beide Seiten des Vorlagenhalters an dem Rahmen exakt verriegelt werden.

Gemäss einer bevorzugten Ausführungsform ist eine Verriegelungseinrichtung zum Verriegeln der Halterung in die jeweilige Belichtungsstellung vorgesehen. Erst wenn die Halterung in die exakte Belichtungsstellung verschwenkt ist, kann sie durch die Verriegelungseinrichtung, die vorzugsweise ebenfalls pneumatisch betätigt wird, verriegelt werden. Damit wird die Parallelität der Halterung zu der Optik gesichert.

Um während der Belichtung einer Vorlage kein Licht aus der Belichtungseinheit austreten zu lassen, welches infolge der grossen Intensität zu einer Beeinträchtigung der Augen einer Bedienungsperson führen könnte, sind vorzugsweise die vertikalen Seitenwände der Halterung konvex ausgebildet, und an den Vertikalseitenwänden eines die Halterung umgebenden Gehäuses sind Dichtleisten angeordnet. Durch die konvexe Ausbildung wird ein gutes Gleiten der Seitenwände an der Dichtleiste ermöglicht, ohne dass ein zu grosser Verschleiss dieser Dichtleiste auftritt. Die Dichtleisten bestehen vorzugsweise aus Bürsten.

Um eine Überhitzung der Scheiben der Halterung und der Vorlagenhalter zu vermeiden, sind die Horizontalwände der Halterung vorzugsweise mit Öffnungen ausgebildet, in dem Gehäuse sind über der Halterung Ventilatoren angeordnet, und zwischen dem Gehäuse und den Horizontalwänden der Halterung sind Dichtleisten vorgesehen, die ebenfalls vorzugsweise als Bürsten ausgebildet sind. Während der Belichtung, das heisst, während das Rücklicht innerhalb der Halterung eingeschaltet ist, wird die Luft aus der Halterung mit Hilfe der darüber angeordneten Ventilatoren abgesaugt und an der Unterseite der Halterung kann kühle Luft eintreten, um an den erwärmten Beleuchtungsröhren entlang zu streichen.

Gemäss einer bevorzugten Ausführungsform erfolgt das Verschwenken der Halterung um die Vertikalachse über einen Motor. Dieser Motor wird eingeschaltet bei gleichzeitigem Lösen der Verriegelung und entsprechend abgeschaltet, während die Halterung in der Belichtungsstellung erneut verriegelt wird.

Zur Unterstützung der Hochschwenkbewegung des Vorlagenhalters bzw. zur Dämpfung des Vorlagenhalters bei dessen Herabschwenken sind vorzugsweise an der Schwenkachse jedes Vorlagenhalters Federn vorgesehen, welche sich an der Halterung abstützen.

In Ausgestaltung der Erfindung kann an jeder Aussenseite jeder Abdeckscheibe der Halterung eine umlaufende Dichtung angeordnet sein, gegen welche sich die Glasscheibe des Vorlagenhalters anlegt, wenn dieser in die senkrechte Belichtungsstellung hochgeschwenkt ist.

Gemäss einer bevorzugten Ausführungsform weist jeder Vorlagenhalter eine Einfassung für die Glasscheibe auf, wobei an der Einfassung abragende Lageraugen ausgebildet sind, die an der Unterseite der Halterung angelenkt sind.

Um die Masshaltigkeit von Halterung und Vorlagenhalter zu gewährleisten, sind diese vorzugsweise aus Alumiumdruckguss ausgebildet. Ferner sind die Halterung an den Stirnflächen und die Einfassungen an der der Halterung gegenüberliegenden Seite vorzugsweise plan geschliffen.

Ein Ausführungsbeispiel der Erfindung wird anhand der Zeichnung näher erläutert. Es zeigen:

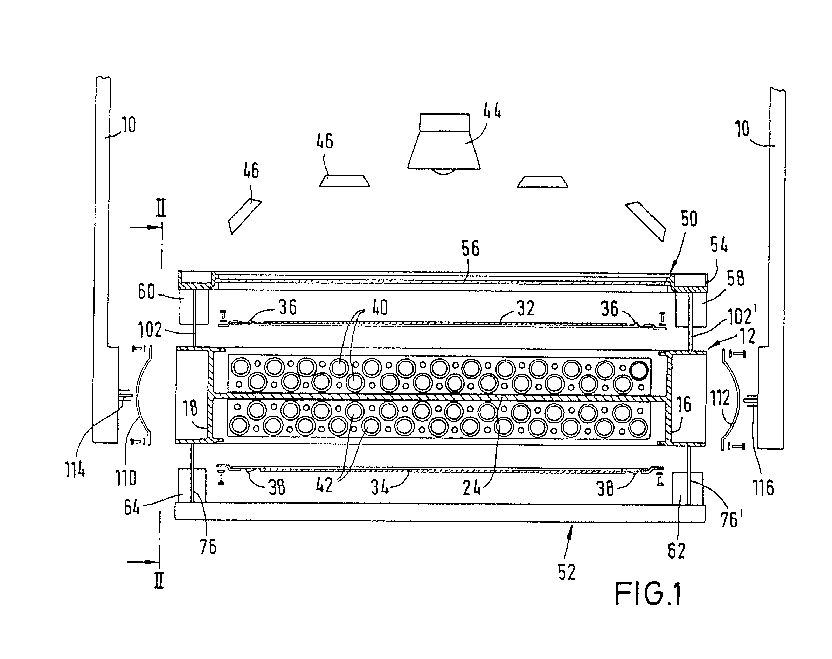

Fig. 1 einen Querschnitt durch eine Ausführungsform einer Belichtungseinheit, wobei der Belichtungsrahmen teilweise in Explosivdarstellung gezeigt ist; und

Fig. 2 eine Ansicht gemäss der Linie II–II von Fig. 1.

Die in den Figuren gezeigte Belichtungseinheit weist ein Gehäuse 10 auf, in welchem eine Halterung 12 um eine Vertikalachse 14 um 180° verschwenkbar gelagert ist. Die Halterung 12 besteht aus Aluminiumdruckguss mit vertikalen Seitenwänden 16 und 18, welche im Querschnitt C-förmig ausgebildet sind, und horizontalen Wänden 20 und 22. Verbunden sind diese Wände 16 bis 22 über eine Mittelwand 24. Die Aussenseiten der Vertikal- und Horizontalseiten sind plan geschliffen. Das Verschwenken der Halterung 12 erfolgt über einen Motor 26, der an der Unterseite des Gehäuses 10 befestigt ist und der ein Ritzel 28 aufweist, das in ein Zahnrad 30 an der Vertikalachse 14 eingreift. Mit diesem Motor 26 wird die Halterung 12 um 180° in Uhrzeigerrichtung und entgegen Uhrzeigerrichtung verschwenkt. Dadurch kann keine Beschädigung der Zuleitungskabel erfolgen, die in die Halterung 12 hineingeführt sind.

Die Stirnseiten der Halterung 12 sind mit Abdeckscheiben 32 und 34 versehen, welche aus einem Milchglas oder einem opaken Kunststoff bestehen können. An den Aussenseiten der Scheiben 32, 34 sind umlaufende Dichtungen 36, 38 angeordnet. Zwischen der Scheibe 32 und der Trennwand 24 ist eine Doppelreihe von Neonröhren 40 und zwischen der Scheibe 34 und der Trennwand 24 eine Doppelreihe von Neonröhren 42 angeordnet. Mit Hilfe dieser Röhren wird ein Rücklicht erzeugt, um eine bessere Beleuchtung der Vorlage zu bewirken. Im Inneren des Gehäuses 10 ist eine Optik 44 angeordnet, welche eine Vorlage aufnimmt, um sie auf eine Druckplatte zu übertragen. Zur Erzeugung eines Auflichts sind um die Optik 44 herum Strahler 46 angeordnet.

Vor jeder Stirnseite der Halterung 12 ist ein Vorlagenhalter 50 bzw. 52 angeordnet.

Jeder Vorlagenhalter 50, 52 besteht aus einer Einfassung 54, an welcher eine Glasscheibe 56 befestigt ist. An der Unterseite der Einfassung 54 sind abragende Lageraugen 58, 60 vorgesehen, über welche der Vorlagenhalter 50 an der Halterung 12 gelagert ist. An dem Vorlagenhalter 52 sind entsprechende Lageraugen 62, 64 vorgesehen. Die Vorlagenhalter 50, 52 sind von einer waagerechten Stellung in eine an jeweils einer Stirnseite der Halterung 12 anliegende vertikale Stellung überführbar. Der Antrieb dieser Bewegung erfolgt über eine Mechanik, die an der Aussenseite der Vertikalwände 16, 18 angeordnet ist.

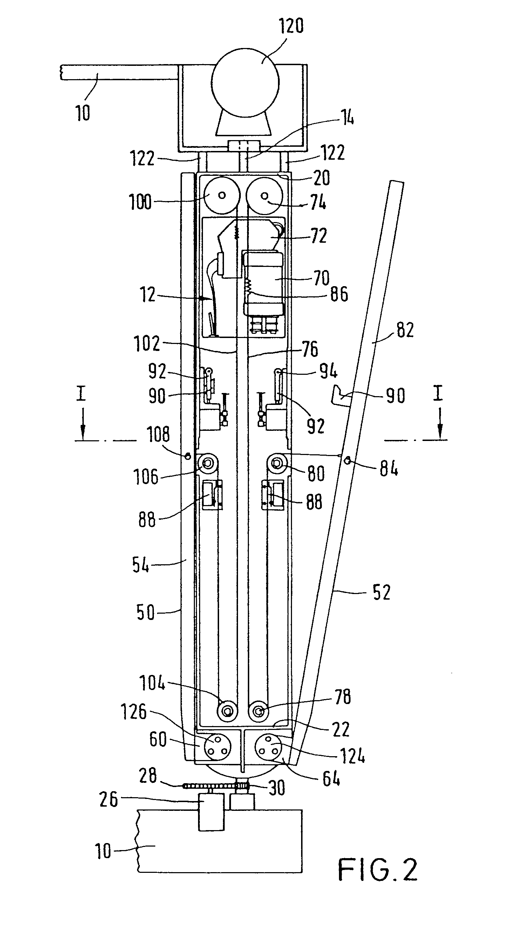

Wie aus Fig. 2 zu ersehen ist, ist an der Aussenseite der Vertikalwand 18 ein Motor 70 angeordnet, welcher über ein Getriebe 72 eine Welle 74 antreibt, die quer durch die ganze Halterung gerichtet, und an welcher eine Trommel zum Aufwickeln eines Seils 76 angeordnet ist. Auf der gegenüberliegenden Vertikalwand 16 ist eine entsprechende zweite Trommel an der Welle 74 vorgesehen, um ein Seil 76' aufzuwickeln. Das Seil 76 ist von der Welle 74 senkrecht nach unten geführt, um über eine Umlenkrolle 78 wieder parallel nach oben bis etwa in die Mitte der Halterung 12 geführt zu werden. Dort ist eine weitere Umlenkrolle 80 vorgesehen, über welche das Seil 76 aus der Halterung 12 nach aussen zu der Einfassung 54 des Vorlagenhalters 52 geführt wird, an welcher das Seil bei 84 befestigt ist. Um geringe Längenveränderungen des Seils auszugleichen, ist in dem Seil eine Feder 86 vorgesehen. Ferner ist ein automatischer Seilspanner 88 angeordnet, um zu gewährleisten, dass die beiden Seile 76 und 76' immer vollständig synchron laufen, kein Verkanten der Einfassung 54 des Vorlagenhalters 52 erfolgt, und dieser mit seiner ganzen, ebenfalls plan geschliffenen Fläche an der Stirnfläche der Halterung 12 anliegt. Um den Vorlagenhalter 52 in seiner Vertikalstellung an der Halterung 12 zu blockieren, ist eine Verriegelungseinrichtung vorgesehen, die aus einem an dem Vorlagenhalter 52 befestigten Haken 90 und einem an der Halterung 12 befestigten Riegel 92 besteht. Der Riegel 92 wird pneumatisch betätigt und weist eine in Vertikalrichtung verschiebbare Rolle 94 auf, die in den Haken 90 eingreift, wenn der Vorlagenhalter 52 an der Halterung 12 anliegt. Eine aus Haken 90 und Riegel 92 bestehende Verriegelungseinrichtung ist an beiden Seiten jedes Vorlagenhalters 50 und 52 vorgesehen.

Das Verschwenken des Vorlagenhalters 50 erfolgt über einen auf der Seite 16 der Halterung angeordneten Motor, der eine Welle 100 antreibt, an welcher ein Seil 102 bzw. 102' auf der anderen Seite aufgewickelt werden kann. Das Seil 102 ist über eine untere Umlenkrolle 104 zu einer im mittleren Bereich der Halterung 12 angeordneten Umlenkrolle 106 geführt, um von dort von der Halterung 12 nach aussen zu dem Vorlagenhalter 50 zu verlaufen, an welchem das Seil bei 108 befestigt ist.

Um die Halterung 12 in jeder Belichtungsstellung verriegeln zu können, ist an der Unterseite des Gehäuses eine pneumatisch betätigbare Verriegelungseinrichtung angeordnet, welche mit einem entsprechenden Element an der Halterung 12 zusammenwirkt. Um während eines Belichtungsvorgangs die Augen der Bedienungsperson vor dem starken Licht zu schützen, sind die vertikalen Seitenwände 16 und 18 mit konvex ausgebildeten Abdeckblechen 110, 112 versehen. An der Innenseite des Gehäuses 10 sind Dichtleisten 114, 116 angeordnet, welche in der Belichtungsstellung an der Aussenseite der Abdeckbleche 110, 112 anliegen. Diese Dichtleisten 114, 116 bestehen vorzugsweise aus Bürsten.

Um die während der Belichtung an dem Rücklicht 40, 42 innerhalb der Halterung auftretende Wärme aus der Halterung 12 zu leiten, sind die Horizontalwände 20, 22 der Halterung mit Öffnungen versehen. An dem Gehäuse 10 sind über der Halterung Ventilatoren 120 angeordnet, welche die an der Unterseite der Halterung 12 eintretende Luft, die an den warmen Leuchtröhren entlangstreicht, an der Oberseite der Halterung 12 durch die Öffnungen in der oberen Horizontalwand 20 abzuziehen. Dadurch wird eine Überhitzung der Scheiben 32, 34 der Halterung 12 sowie der Scheiben 56 der Vorlagenhalter verhindert. Um eine optimale Luftführung durch das Innere der Halterung zu erhalten, sind an dem Gehäuse an der Ober- und Unterseite Dichtleisten 122 vorgesehen, welche in der Belichtungsstellung der Halterung an dessen Ober- bzw. Unterseite anliegen. Die Dichtleisten 122 bestehen wie die Dichtleisten 114, 116 ebenfalls vorzugsweise aus Bürsten.

Um den Motor 70 beim Hochschwenken der Halterung zu unterstützen, sind an den Wellen 124, 126 Federn angeordnet, welche sich an der Halterung abstützen. Diese Federn wirken gleichzeitig als Dämpfung beim Herablassen der Halterung. Die Motoren zum Antreiben der Seile 76, 76' bzw. 102, 102' sind elektronisch gesteuert, so dass die Schwenkgeschwindigkeit jedes Vorlagenhalters vor Erreichen seiner waagerechten bzw. senkrechten Endstellung kontinuierlich verringert wird.

**Patentansprüche**

1. Halterung für Vorlagen, die auf eine Druckplatte abgebildet werden, mit einer senkrechten Belichtungsposition der Vorlage, mit einer waagerechten Position zum Einlegen bzw. Entnehmen der Vorlage und mit einer senkrechten Zwischenposition, sowie mit Mitteln zum Verschwenken der Vorlage um 180° zwischen der Belichtungsposition und der Zwischenposition, wobei zwei Vorlagehalter (52, 50) für zwei Vorlagen sowie Mittel zum Verschwenken jeder dieser Vorlagenhalter zwischen der Einlegeposition und der Zwischenposition vorgesehen sind, dadurch gekennzeichnet, dass die Verschwenkung um 180° um eine vertikale Achse (14) erfolgt, dass in der Halterung eine Beleuchtungsvorrichtung (40, 42) zur Beleuchtung der Vorlagen im Durchlicht vorgesehen ist, und dass die Vorlagen beim Verschwenken von der Einlegeposition in die Zwischenposition zur Anlage an Abdeckscheiben (32, 34) kommen.

2. Halterung nach Anspruch 1, dadurch gekennzeichnert, dass die Abdeckscheiben (32, 34) aus Milchglas oder opakem Kunststoff bestehen, dass die Beleuchtungsvorrichtung (40, 42) aus vertikal angeordneten Neonröhren oder dergleichen besteht, und dass in der Vertikalmittelebene der Halterung (12) eine Trennwand (24) angeordnet ist.

3. Halterung nach Anspruch 1 oder 2, dadurch gekennzeichnet, dass die Vorlagenhalter (50, 52) über motorangetriebene Seilzüge (102, 76) verschwenkbar sind, dass im oberen Bereich der Halterung (12) über jeweils einen Motor (70) angetriebene Aufwickelwellen (74, 100) angeordnet sind, und dass Seile (76, 102) über Umlenkrollen (78, 80; 104, 106) zu den Vorlagenhaltern (52, 50) geführt sind.

4. Halterung nach einem der Ansprüche 1 bis 3, dadurch gekennzeichnet, dass für jeden Vorlagenhalter (50, 52) Verriegelungseinrichtungen (90, 92) vorgesehen sind, dass jede Verriegelungseinrichtung aus einem an dem Vorlagenhalter (52) angeordneten Haken (90) und einem an der Halterung (12) angeordneten Riegel (92) besteht, und dass der Riegel (92) eine pneumatisch betätigte Rolle ist.

5. Halterung nach einem der Ansprüche 1 bis 4, dadurch gekennzeichnet, dass vertikale Seitenwände (16, 18) der Halterung (12) mit konvex ausgebildeten Abdeckungen (110, 112) ausgebildet sind, dass an den Vertikalseitenwänden eines die Halterung (12) umgebenden Gehäuses (10) Dichtleisten (114, 116) angeordnet sind, und dass die Dichtleisten (114, 116) aus Bürsten bestehen.

6. Halterung nach einem der Ansprüche 1 bis 5, dadurch gekennzeichnet, dass Horizontalwände (20, 22) der Halterung (12) mit Öffnungen ausgebildet sind, dass in dem Gehäuse (10) über der Halterung (12) Ventilatoren (120) angeordnet sind, und dass zwischen dem Gehäuse (10) und den Horizontalwänden (20, 22) der Halterung (12) Dichtleisten (122) in Form von Bürsten oder dergleichen vorgesehen sind.

7. Halterung nach einem der Ansprüche 1 bis 6, dadurch gekennzeichnet, dass das Verschwenken der Halterung (12) um die Vertikalachse (14) über einen Motor (26) erfolgt, und dass die Motoren (70) zum Verschwenken der Vorlagenhalter (50, 52) sowie der Motor (26) zum Verschwenken der Halterung um die Vertikalachse elektronisch gesteuert sind.

8. Halterung nach einem der Ansprüche 1 bis 7, dadurch gekennzeichnet, dass auf der Schwenkachse (124, 126) jedes Vorlagenhalters (52, 50) sich an der Halterung (12) abstützende Federn vorgesehen sind.

9. Halterung nach einem der Ansprüche 1 bis 8, dadurch gekennzeichnet, dass eine Verriegelungseinrichtung zum Verriegeln der Halterung (12) in der jeweiligen Belichtungsstellung vorgesehen ist.

10. Halterung nach einem der Ansprüche 1 bis 9, dadurch gekennzeichnet, dass jeder Vorlagenhalter (50, 52) eine Einfassung (54, 82) für die Glasscheibe (56) mit abragenden Lageraugen (58, 60; 62, 64) aufweist, dass die Lageraugen (58, 60; 62, 64) an der Unterseite der Halterung (12) angelenkt sind, dass die Halterung (12) an den Stirnflächen und die Einfassungen (54, 82) an der der Halterung (12) gegenüberliegenden Seite plan geschliffen sind und dass an der Aussenseite jeder Abdeckscheibe (32, 34) eine umlaufende Dichtung (36, 38) angeordnet ist.

## Claims

1. Holder for original copies to be reproduced on a printing plate, with a vertical illumination position for the copy, with a horizontal position for insertion and removal of the copy, and with a vertical intermediate position, together with means for swinging the copy through 180° between the illumination and the intermediate positions, there being two copy-holders (52, 50) for two copies together with means for swinging each of these copy-holders between the insertion position and the intermediate position, characterized in that swinging takes place through 180° about a vertical axis (14), that in the holder an illumination system (40, 42) is provided for illuminating the copies from behind, and that as the copies swing from the insertion position to the intermediate position they come to bear against cover plates (32, 34).

2. Holder in accordance with claim 1, characterized in that the cover plates (32, 34) are of frosted glass or opaque plastic, that the illumination equipment (40, 42) consists of vertical neon tubes or similar items, and that there is a partition (24) in the central vertical plane of the holder (12).

3. Holder in accordance with claim 1 or 2, characterized in that the copy-holders (50, 52) are swung by motor-driven ropes (102, 76), that winding shafts (74, 100), each driven by a motor (70), are mounted in the top part of the holder (12), and that ropes (76, 102) are reeved around pulleys (78, 80; 104, 106) to the copy-holders (52, 50).

4. Holder in accordance with one of claims 1 to 3, characterized in that for each copy-holder (50, 52) locking devices (90, 92) are provided, that each locking device comprises a hook (90) on the copy-holder (52) and a catch (92) on the holder (12), and that the catch (92) is a pneumatically-operated roller.

5. Holder in accordance with one of claims 1 to 4, characterized in that vertical sidewalls (16, 18) of the holder (12) are provided with convex-shaped covers (110, 112), that sealing strips (114, 116) are mounted on the vertical sidewalls of a housing (10) enclosing the holder (12), and that the sealing strips (114, 116) consist of brushes.

6. Holder in accordance with one of claims 1 to 5, characterized in that horizontal walls (20, 22) of the holder (12) are formed with openings, that fans (120) are mounted in the housing (10) above the holder (12) and that between the housing (10) and the horizontal walls (20, 22) of the holder (12) sealing strips (122) are provided in the form of brushes or similar material.

7. Holder in accordance with one of claims 1 to 6, characterized in that swinging of the holder (12) about the vertical axis (14) is effected by a motor (26), and that the motors (70) for swinging the copy-holders (50, 52) and also the motor (26) for swinging the holder are electronically controlled.

8. Holder in accordance with one of claims 1 to 7, characterized in that springs are provided on the hinge spindle (124, 126) of each copy-holder (52, 50) and supported on the holder (12).

9. Holder in accordance with one of claims 1 to 8, characterized in that a locking device is provided to lock the holder (12) in the respective illumination position.

10. Holder in accordance with one of claims 1 to 9, characterized in that each copy-holder (50, 52) has a frame (54, 82) for the glass pane (56) with bearing eyes (58, 60; 62, 64) protruding downwards, that the bearing eyes (58, 60; 62, 64) are attached to the underside of the holder (12), that the holder (12) at the end faces and the frames (54, 82) on the side opposite to the holder (12) are ground smooth, and that there is a peripheral seal (36, 38) on the outside of each cover plate (32, 34).

## Revendications

1. Support pour originaux, dont les images sont formées sur une plaque d'impression, avec une position verticale d'exposition de l'original, une position horizontale pour l'insertion ou le prélèvement de l'original et une position verticale intermédiaire, et comportant des moyens pour faire pivoter l'original de 180° entre la position d'exposition et la position intermédiaire, et dans lequel il est prévu deux éléments de support (52, 50) pour deux originaux ainsi que des moyens pour faire pivoter chacun de ces éléments de support d'originaux entre la position d'insertion et la position intermédiaire, caractérisé en ce que le pivotement s'effectue sur 180° autour d'un axe vertical (14), que dans le support, il est prévu un dispositif d'éclairement (40, 42) servant à éclairer les originaux avec la lumière transmise et que lors de leur pivotement depuis la position d'insertion dans la position intermédiaire, les originaux viennent s'appliquer contre des plaques de recouvrement (32, 34).

2. Support selon la revendication 1, caractérisé en ce que les plaques de recouvrement (32, 34) sont réalisées en verre opale ou en une matière plastique opaque, que le dispositif d'éclairement (40, 42) est constitué par des tubes à néon ou analogues, disposés verticalement, et qu'une paroi de séparation (24) est disposée dans le plan médian vertical du support (12).

3. Support selon la revendication 1 ou 2, caractérisé en ce que les éléments (50, 52) de support d'originaux peuvent être amenés à pivoter au moyen de câbles de traction (102, 76) entraînés par des moteurs, que des arbres d'enroulement (74, 100) entraînés par des moteurs respectifs (70) sont disposés dans la partie supérieure du support (12) et que des câbles (76, 102) sont reliés aux éléments (52, 50) de support d'originaux en circulant sur des galets de renvoi (78, 80; 104, 106).

4. Support selon l'une des revendications 1 à 3, caractérisé en ce que pour chaque élément (50, 52) de support d'un original, il est prévu des dispositifs de verrouillage (90, 92), que chaque dispositif de verrouillage est constitué par un crochet (90) disposé sur un élément (52) de support d'un original et par un verrou (92), disposé sur le support (12), et que le verrou (92) est un galet mû pneumatiquement.

5. Support selon l'une des revendications 1 à 4, caractérisé en ce que les parois latérales verticales (16, 18) du support (12) sont réalisées avec des éléments de revêtement (110, 112) possédant une forme convexe, que des barrettes d'étanchéité (114, 116) sont disposées sur les parois latérales verticales d'un boîtier (10) entourant le support (12) et que les barrettes d'étanchéité (114, 116) sont constituées par des brosses.

6. Support selon l'une des revendications 1 à 5, caractérisé en ce que des parois horizontales (20, 22) du support (12) sont munies d'ouvertures, que des ventilateurs (120) sont disposés dans le boîtier (10) au-dessus du support (12) et que des barrettes d'étanchéité (122) sous la forme de brosses ou analogues sont prévues entre le boîtier (10) et les parois horizontales (20, 22) du support (12).

7. Support selon l'une des revendications 1 à 6, caractérisé en ce que le pivotement du support (12) autour de l'axe vertical (14) est réalisé au moyen d'un moteur (26), et que les moteurs (70) servant à faire pivoter les éléments (50, 52) de support des originaux ainsi que le moteur (26) servant à faire pivoter le support autour de l'axe vertical sont commandés par voie électronique.

8. Support selon l'une des revendications 1 à 7, caractérisé en ce que des ressorts prenant appui sur le support (12) sont prévus sur l'axe de pivotement (124, 126) de chaque élément (52, 50) de support d'un original.

9. Support selon l'une des revendications 1 à 8, caractérisé en ce que le dispositif de verrouillage servant à verrouiller le support (12) est prévu dans la position respective d'exposition.

10. Support selon l'une des revendications 1 à 9, caractérisé en ce que chaque élément (50, 52) de support d'originaux comporte un rebord (54, 82) pour la plaque de verre (56), comportant des pattes de support saillantes (58, 60; 62, 64), que les pattes de support (58, 60; 62, 64) sont articulées sur la face inférieure du support (12), que les faces frontales du support (12) et la face des rebords (54, 82), située à l'opposé du support (12), comportent un poli plat et qu'une garniture d'étanchéité circonférentielle (36, 38) est disposée sur la face extérieure de chaque plaque de revêtement (32, 34).

FIG.1

FIG.2